# FASCICULE DE BREVET EUROPEEN

(11) **EP 0 639 333 B1**
(45) Date de publication et mention de la délivrance du brevet: **03.11.1999**
(21) Numéro de dépôt: 93113326.8
(22) Date de dépôt: 20.08.1993
(51) Int. Cl.: A23D 9/00, A23C 11/04

(54) **Composition lipidique à usage alimentaire**
Lipidzusammensetzung für Nahrungsmittel
Lipid composition for use in food products

(43) Date de publication de la demande: 22.02.1995
(60) Demande divisionnaire: 99200469.7
(73) Titulaire: SOCIETE DES PRODUITS NESTLE S.A., 1800 Vevey (CH)
(72) Inventeur: Bracco, Umberto, CH-1800 Vevey (CH); Coiffier, Eric, CH-1814 La Tour-de-Peilz (CH)
(74) Mandataire: Archambault, Jean

(56) Documents cités:
- EP-A- 0 326 198
- EP-A- 0 340 635
- EP-A- 0 404 058
- EP-A- 0 430 870
- EP-A- 0 484 266
- EP-A- 0 494 707
- EP-A- 0 517 425
- WO-A-93/00019
- GB-A- 2 202 726

## Description

La présente invention a trait à une composition lipidique destinée à être utilisée comme aliment ou dans des produits alimentaires.

Les lipides, mis à part leur fonction en tant que source d'énergie, jouent plusieurs rôles en nutrition en tant que source d'acides gras essentiels:
- comme composants indispensables à la structure cellulaire et aux fonctions membranaires,
- comme précurseurs des métabolites éicosanoïdes qui interviennent dans de nombreux systèmes physiologiques comme les systèmes cardio-vasculaire, immunitaire, respiratoire et digestif,
- comme régulateurs des lipides sanguins.

La réponse physiologique à la consommation d'huiles alimentaires dépend de la composition en acides gras de ces huiles. Les acides gras sont classés en différentes familles, n-9, n-6 et n-3 , en fonction de leur structure, c'est à dire selon la présence et la situation des doubles liaisons dans la chaîne carbonée. Chaque famille a une activité propre spécifique, mais il existe des interactions entre les différentes familles pendant le métabolisme. Dans le cas du contrôle des lipides sanguins, il convient de tenir compte de plusieurs critères:
- l'apport alimentaire en acides gras saturés doit être limité en raison de leur influence sur l'augmentation du cholestérol et des lipides totaux,
- un contenu trop élevé en acides gras polyinsaturés dans le régime n'est pas souhaitable en raison d'une part de l'action négative sur le cholestérol des lipoprotéines haute densité (HDL), bénéfiques, et d'autre part des risques liés à la peroxydation des acides gras donnant des effets négatifs au niveau cellulaire,
- les acides gras monoinsaturés ne présentent pas les risques mentionnés précédemment et ont un effet favorable sur la diminution du cholestérol des lipoprotéines basse densité (LDL), néfastes,
- les fonctions physiologiques des acides gras diffèrent aussi, dans une même famille, selon la longueur de la chaîne carbonée. Par exemple, dans la famille des acides gras n-6, il existe un acide gras, l'acide gammalinolénique (GLA), qui a une activité plus prononcée que les autres membres sur le contrôle des lipides sanguins. Il en est de même pour l'acide éicosapentaénoïque (EPA) dans la famille n-3.

EP-A-0 326 198 concerne une huile de consommation pour salade et à cuire d'origine purement végétale, nutritionnellement équilibrée qui contient une quantité minimale d'acides gras saturés et ne contient pas d'acides gras polyinsaturés à longue chaîne. Le procédé de préparation de l'huile consiste, soit en une resynthèse de triglycérides à partir d'acides gras après leur purification et leur mélange dans les proportions souhaitées avec le glycérol, soit en une élimination des acides gras saturés sur colonne à partir d'huile de tournesol à haute teneur en acide oléique ou de Canola.

EP-A-0 404 058 concerne la mise à disposition d'un mélange lipidique pour l'alimentation des nourrissons et des prématurés qui soit nutritionnellement proche de celui du lait humain, c'est à dire rapidement assimilable, hautement énergétique et susceptible de fournir les lipides membranaires et le cholestérol nécessaires. Le profil des acides gras est caractérisé par la présence d'acides gras polyinsaturés (tri-insaturés et plus) à longue chaîne constitués des acides n-6 arachidonique, gamma-linolénique et dihomo-gammalinolénique et les acides n-3 octadécatétraènique, eicosapentaènoique, docosahexaènoique, par une quantité élevée d'acides gras saturés, de l'ordre de 40 %, dont une part appréciable à chaîne moyenne, par un rapport des tri-insaturés et plus ci-dessus n-6/n-3 de 0,1:1 à 3: 1 et par la présence de lécithine d'oeuf. Le mélange lipidique est riche en cholestérol. Le procédé de préparation du mélange lipidique consiste à chauffer la graisse solide et à la mélanger à chaud avec un émulsifiant et un antioxydant, à ajouter au mélange liquide les acides gras polyinsaturés à longue chaîne et les autres huiles.

La composition lipidique selon l'invention est caractérisée par le fait que les acides gras des triglycérides comprennent, en poids, au plus 10% d'acides gras saturés, 50 % à 70 % d'acides gras monoinsaturés et 30 à 40 % d'acides gras polyinsaturés, que les acides gras n-6 représentent 25 à 35 %, que le rapport pondéral des acides gras de la famille n-6 sur ceux de la famille n-3 est 4,5:1 à 8,5:1 et que les acides gras polyinsaturés comprennent une quantité efficace d'acides des familles n-3 et n-6 de degré d'insaturation 3 et plus.

La composition lipidique selon l'invention tient compte non seulement des activités des acides gras essentiels, mais aussi de l'interaction de chaque acide gras essentiel de la famille n-6, par exemple l'acide linoléique, avec son homologue de la famille n-3, par exemple l'acide alpha-linolénique, d'une déficience enzymatique éventuelle ne permettant pas de transformer ces acides gras en dérivés désaturés supérieurs en C 20 en raison de l'incapacité enzymatique à désaturer ces acides.

La composition contient une huile riche en acide oléique qui a une action de sructure et de véhicule des acides gras bio-actifs essentiels tout en étant neutre du point de vue de la bioactivité. La teneur élevée en acide oléique confère au mélange lipidique une bonne stabilité à l'oxydation et à la photo-oxydation, ce qui évite la formation de radicaux oxygénés actifs.

Les huiles de choix répondant à cette exigeance sont de préférence, l'huile d'olive, l'huile d'abricot, les hybrides de tournesol et de carthame à haute teneur en acide oléique, par exemple > à 60% en poids. On peut aussi citer les oléines d'huiles végétales, par exemple de palme, obtenues par fractionnement à sec, par solvant ou par tensioactifs d'huiles et de graisses végétales.

L'huile en question constitue 45 à 68 %, par exemple environ 50 % en poids du mélange lipidique final.

La composition contient des huiles apportant les acides gras essentiels des familles n-6 et n-3 dans un rapport tenant compte de la plus grande réactivité de ceux de la famille n-3.

Les huiles riches en acide gras de la famille n-6 sont choisies parmi celles riches en acide linoléique, de préférence contenant plus de 60 % en poids de cet acide par rapport aux acides gras totaux, par exemple l'huile de tournesol, l'huile de pépins de raisin, l'huile de passiflore, l'huile de tomate ou l'huile de carthame. Parmi les huiles de la famille n-6, la composition comprend celles susceptibles de fournir une quantité efficace d'acide de degré d'insaturation au moins 3, par exemple d'acide gamma-linolénique dont le rôle est de pallier à l'insuffisance des désaturases. On peut citer l'huile d'onagre, de bourrache et de préférence l'huile de pépins de cassis.

Comme huiles fournissant les acides gras de la famille n-3, on peut citer celles qui contiennent de préférence plus de 20 % en poids d'acide alpha-linolénique par rapport aux acides gras totaux, par exemple l'huile de colza, l'huile de chia, l'huile de lin, l'huile de kiwi, l'huile de luzerne ou l'huile de rosa mosqueta. On peut également citer celles qui apportent les acides EPA et DHA, par exemple l'huile d'organismes marins.

La composition moyenne des acides gras des triglycérides principaux de la composition finale est la suivante:

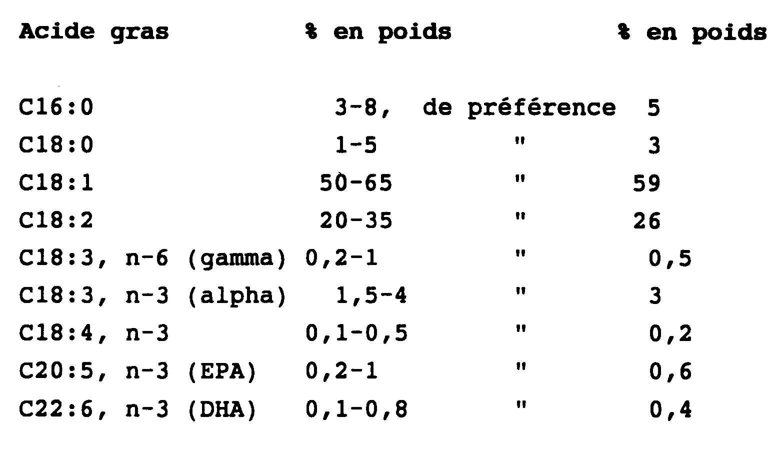

Sur la base de leur compositions respectives en acides gras, les mélanges des huiles ci-après sont préférés:

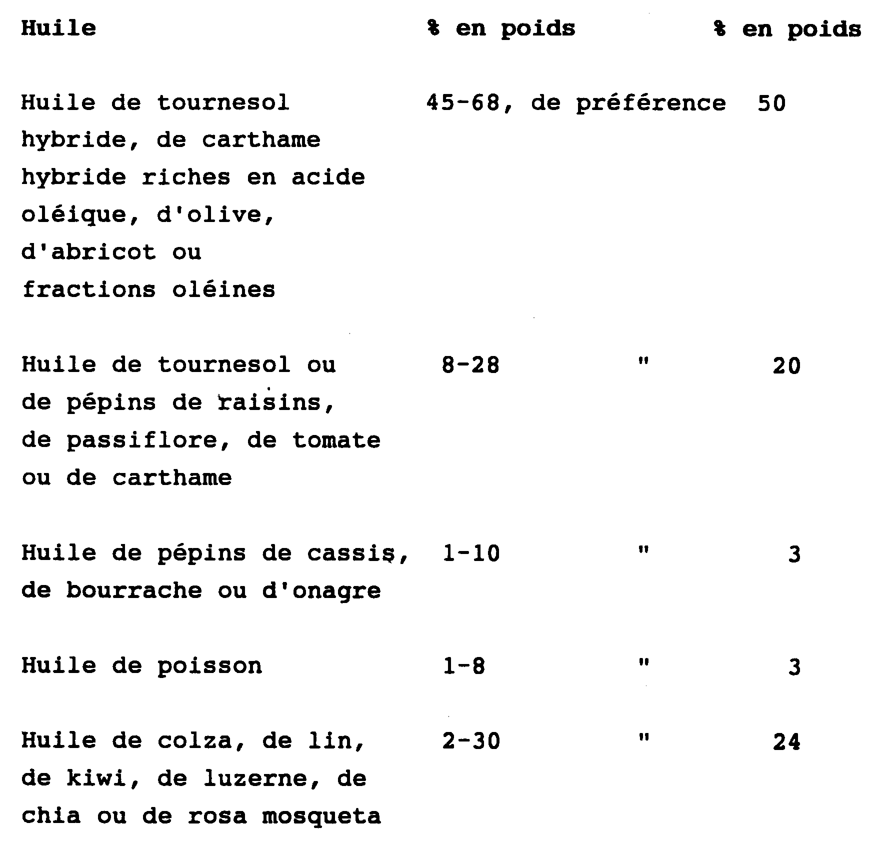

La composition selon l'invention peut encore contenir d'autres huiles en quantité mineure, dans le but, par exemple d'améliorer ses propriétés de conservation, par exemple une huile de germes de céréales riche en vitamine E comme antioxydant.

Elle peut en outre contenir des antioxydants liposolubles ou rendus liposolubles, par exemple un mélange d'acide ascorbique et/ou citrique, de lécithine, de tocophérol et de vitamine B.

La composition lipidique selon l'invention est avantageusement utilisée pour la consommation individuelle comme huile de table, mais aussi dans divers aliments comme, par exemple, des sauces à salades, mayonnaises, produits laitiers, par exemples yaourts, substituts de laits, sauces à la crème, crèmes douce ou aigre, crèmes glacées, crèmes dessert, confiserie, pâtisserie ou biscuits en remplacement total des matières grasses de ces produits, par exemple de la matière grasse lactique. Ainsi, la composition en acides gras de la ration alimentaire quotidienne pourrait être optimalisée par une consommation directe de la composition lipidique selon l'invention et par une consommation indirecte sous forme de produits manufacturés.

Dans un tel aliment, la composition lipidique selon l'invention peut représenter 1 à 80%, et de préférence 5 à 60 % en poids.

Les exemples ci-après illustrent l'invention. Dans ceux-ci, les pourcentages et parties sont pondéraux sauf indication contraire.

### Exemple 1

On mélange sous agitation et sous azote les huiles raffinées ci-après dans les proportions indiquées et dans l'ordre décroissant des quantités respectives. L'incorporation des antioxydants a lieu préalablement au mélange dans l'huile de tournesol hybride en tant que solution mère.

| **Huile** | **%** |
|---|---|
| Huile de tournesol hybride contenant 77,4 % d'acide oléique en poids des acides gras (HOSFO) | 50 |
| Huile de colza | 24 |
| Huile de tournesol (SFO) | 20 |
| Huile de pépins de cassis | 3 |
| Huile de poisson | 3 |

Pour ce faire, dans un réacteur en acier inoxydable muni d'un système de double manteau à circulation de fluides pour thermostatisation et d'un agitateur à vitesse variable, on additionne l'huile de pépins de cassis et l'huile de poisson aux huiles de tournesol hybride, de colza et de tournesol standard en évitant des températures supérieures à 30°C.
L'huile de tournesol hybride sert de solution mère à un antioxydant, p.ex. la vitamine E (tocopherol et ses esters) un extrait naturel à pouvoir antioxydant (p.ex. d'épices) dans des proportions allant jusqu'à 1'000 ppm (partie par million) calculées sur le mélange d'huile. En circuit fermé, on conditionne le mélange en fûts à surface plastifiée, préférablement d'une capacité de 25 kg et sous atmosphère d'azote pour éviter les dégradations oxydatives liées à l'insaturation du mélange.

Le tableau 1 ci-après donne la composition du mélange.

**TABLEAU 1**

| Acides gras (en %) | HOSFO | SFO | Huile de cassis | Huile de poisson | Huile de colza | Mélange |
|---|---|---|---|---|---|---|
| C14:0 | | | | 5,7 | | 0,17 |
| C16:0 | 4,0 | 6,5 | 6,2 | 12,5 | 4,9 | 5,04 |
| C16:1 | | 0,1 | 0,4 | 7,4 | 0,2 | 0,30 |
| C18:0 | 3,8 | 4,2 | 1,5 | 1,7 | 1,7 | 3,24 |
| C18:1 | 77,4 | 25,5 | 12,9 | 11,7 | 59,3 | 58,77 |
| C18:2 (n-6) | 13,3 | 63,0 | 45,7 | 1,3 | 22,6 | 26,08 |
| C18:3 (n-3) | 0,1 | | 13,9 | 0,9 | 9,6 | 2,80 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,7 | 0,27 |
| C20:1 | 0,2 | | 0,5 | 5,5 | 0,9 | 0,50 |
| C20:5 (n-3) | | | | 19,5 | | 0,58 |
| C22:0 | 1,0 | 0,6 | | | 0,1 | 0,64 |
| C22:1 | | | | 4,0 | | 0,12 |
| C22:5 (n-3) | | | | 2,6 | | 0,08 |
| C22:6 (n-3) | | | | 12,2 | | 0,37 |
| % d'huile | 50 | 20 | 3 | 3 | 24 | 100 |
| AG saturés (%) | | | | | | 9,37 |
| AG monoinsat (%) | | | | | | 59,69 |
| AG polyinsat (%) | | | | | | 30,60 |
| Total AG n-6 (%) | | | | | | 26,58 |
| Total AG n-3 (%) | | | | | | 4,02 |
| Rapport n-6/n-3 | | | | | | 6,61 |

### Exemples 2-22

On prépare le mélange d'huiles comme à l'exemple 1. Les tableaux 2 à 22 donnent la composition des mélanges.

**TABLEAU 2**

| Acides gras (en %) | HOSFO | SFO | Huile de cassis | Huile de poisson | Huile de colza | Mélange |
|---|---|---|---|---|---|---|
| C14:0 | | | | 5,7 | | 0,11 |
| C16:0 | 4,0 | 6,5 | 6,2 | 12,5 | 4,9 | 4,95 |
| C16:1 | | 0,1 | 0,4 | 7,4 | 0,2 | 0,23 |
| C18:0 | 3,8 | 4,2 | 1,5 | 1,7 | 1,7 | 3,25 |
| C18:1 | 77,4 | 25,5 | 12,9 | 11,7 | 59,3 | 59,71 |
| C18:2 (n-6) | 13,3 | 63,0 | 45,7 | 1,3 | 22,6 | 26,07 |
| C18:3 (n-3) | 0,1 | | 13,9 | 0,9 | 9,6 | 2,84 |
| C18:3 (n-6) | | 0,1 | 15,7 | 0,2 | | 0,34 |
| C18:4 (n-3) | | | 3,0 | 3,5 | | 0,13 |
| C20:0 | 0,2 | | | 0,1 | 0,7 | 0,28 |
| C20:1 | 0,2 | | 0,5 | 5,5 | 0,9 | 0,45 |
| C20:5 (n-3) | | | | 19,5 | | 0,39 |
| C22:0 | 1,0 | 0,6 | | | 0,1 | 0,65 |
| C22:1 | | | | 4,0 | | 0,08 |
| C22:5 (n-3) | | | | 2,6 | | 0,05 |
| C22:6 (n-3) | | | | 12,2 | | 0,24 |
| % d'huile | 50 | 20 | 2 | 2 | 26 | 100 |
| AG saturés (%) | | | | | | 9,24 |
| AG monoinsat (%) | | | | | | 60,47 |
| AG polyinsat (%) | | | | | | 30,06 |
| Total AG n-6 (%) | | | | | | 26,40 |
| Total AG n-3 (%) | | | | | | 3,66 |
| Rapport n-6/n-3 | | | | | | 7,22 |

**TABLEAU 3**

| Acides gras (en %) | HOSFO | SFO | Huile de cassis | Huile de poisson | Huile de colza | Mélange |
|---|---|---|---|---|---|---|
| C14:0 | | | | 5,7 | | 0,23 |
| C16:0 | 4,0 | 6,5 | 6,2 | 12,5 | 4,9 | 5,13 |
| C16:1 | | 0,1 | 0,4 | 7,4 | 0,2 | 0,38 |
| C18:0 | 3,8 | 4,2 | 1,5 | 1,7 | 1,7 | 3,24 |
| C18:1 | 77,4 | 25,5 | 12,9 | 11,7 | 59,3 | 57,83 |
| C18:2 (n-6) | 13,3 | 63,0 | 45,7 | 1,3 | 22,6 | 26,10 |
| C18:3 (n-3) | 0,1 | | 13,9 | 0,9 | 9,6 | 2,75 |
| C18:3 (n-6) | | 0,1 | 15,7 | 0,2 | | 0,66 |
| C18:4 (n-3) | | | 3,0 | 3,5 | | 0,26 |
| C20:0 | 0,2 | | | 0,1 | 0,7 | 0,26 |
| C20:1 | 0,2 | | 0,5 | 5,5 | 0,9 | 0,54 |
| C20:5 (n-3) | | | | 19,5 | | 0,78 |
| C22:0 | 1,0 | 0,6 | | | 0,1 | 0,64 |
| C22:1 | | | | 4,0 | | 0,16 |
| C22:5 (n-3) | | | | 2,6 | | 0,10 |
| C22:6 (n-3) | | | | 12,2 | | 0,49 |
| % d'huile | 50 | 20 | 4 | 4 | 22 | 100 |
| AG saturés (%) | | | | | | 9,50 |
| AG monoinsat (%) | | | | | | 58,90 |
| AG polyinsat (%) | | | | | | 31,14 |
| Total AG n-6 (%) | | | | | | 26,76 |
| Total AG n-3 (%) | | | | | | 4,39 |
| Rapport n-6/n-3 | | | | | | 6,10 |

**TABLEAU 4**

| Acides gras (en %) | HOSFO | SFO | Huile de cassis | Huile de poisson | Huile de colza | Mélange |
|---|---|---|---|---|---|---|
| C14:0 | | | | 5,7 | | 0,29 |
| C16:0 | 4,0 | 6,5 | 6,2 | 12,5 | 4,9 | 5,21 |
| C16:1 | | 0,1 | 0,4 | 7,4 | 0,2 | 0,45 |
| C18:0 | 3,8 | 4,2 | 1,5 | 1,7 | 1,7 | 3,24 |
| C18:1 | 77,4 | 25,5 | 12,9 | 11,7 | 59,3 | 56,89 |
| C18:2 (n-6) | 13,3 | 63,0 | 45,7 | 1,3 | 22,6 | 26,12 |
| C18:3 (n-3) | 0,1 | | 13,9 | 0,9 | 9,6 | 2,71 |
| C18:3 (n-6) | | 0,1 | 15,7 | 0,2 | | 0,81 |
| C18:4 (n-3) | | | 3,0 | 3,5 | | 0,33 |
| C20:0 | 0,2 | | | 0,1 | 0,7 | 0,24 |
| C20:1 | 0,2 | | 0,5 | 5,5 | 0,9 | 0,58 |
| C20:5 (n-3) | | | | 19,5 | | 0,97 |
| C22:0 | 1,0 | 0,6 | | | 0,1 | 0,64 |
| C22:1 | | | | 4,0 | | 0,20 |
| C22:5 (n-3) | | | | 2,6 | | 0,13 |
| C22:6 (n-3) | | | | 12,2 | | 0,61 |
| % d'huile | 50 | 20 | 5 | 5 | 20 | 100 |
| AG saturés (%) | | | | | | 9,63 |
| AG monoinsat (%) | | | | | | 58,12 |
| AG polyinsat (%) | | | | | | 31,69 |
| Total AG n-6 (%) | | | | | | 26,94 |
| Total AG n-3 (%) | | | | | | 4,75 |
| Rapport n-6/n-3 | | | | | | 5,67 |

**TABLEAU 5**

| Acides gras (en %) | HOSFO | Huile de tomates | Huile de cassis | Huile de poisson | Huile de colza | Mélange |
|---|---|---|---|---|---|---|
| C14:0 | | 0.3 | | 5.7 | | 0.23 |
| C16:0 | 4.0 | 12.9 | 6.2 | 12.5 | 4.9 | 6.32 |
| C16:1 | | 0.1 | 0.4 | 7.4 | 0.2 | 0.30 |
| C18:0 | 3.8 | 4.4 | 1.5 | 1.7 | 1.7 | 3.28 |
| C18:1 | 77.4 | 19.0 | 12.9 | 11.7 | 59.3 | 57.47 |
| C18:2 (n-6) | 13.3 | 60.9 | 45.7 | 1.3 | 22.6 | 25.66 |
| C18:3 (n-3) | 0.1 | 2.1 | 13.9 | 0.9 | 9.6 | 3.22 |
| C18:3 (n-6) | | | 15.7 | 0.2 | | 0.48 |
| C18:4 (n-3) | | | 3.0 | 3.5 | | 0.20 |
| C20:0 | 0.2 | | | 0.1 | 0.7 | 0.27 |
| C20:1 | 0.2 | | 0.5 | 5.5 | 0.9 | 0.50 |
| C20:5 (n-3) | | | | 19.5 | | 0.58 |
| C22:0 | 1.0 | | | | 0.1 | 0.52 |
| C22:1 | | | | 4.0 | | 0.12 |
| C22:5 (n-3) | | | | 2.6 | | 0.08 |
| C22:6 (n-3) | | | | 12.2 | | 0.37 |
| % d'huile | 50 | 20 | 3 | 3 | 24 | 100 |
| AG saturés (%) | | | | | | 10.63 |
| AG monoinsat (%) | | | | | | 58.39 |
| AG polyinsat (%) | | | | | | 30.58 |
| Total AG n-6 (%) | | | | | | 26.14 |
| Total AG n-3 (%) | | | | | | 4.44 |
| Rapport n-6/n-3 | | | | | | 5.88 |

**TABLEAU 6**

| Acides gras (en %) | HOSFO | Huile de passiflore | Huile de cassis | Huile de poisson | Huile de colza | Mélange |
|---|---|---|---|---|---|---|
| C14:0 | | | | 5,7 | | 0,17 |
| C16:0 | 4,0 | 11,0 | 6,2 | 12,5 | 4,9 | 5,94 |
| C16:1 | | 0,1 | 0,4 | 7,4 | 0,2 | 0,30 |
| C18:0 | 3,8 | 2,6 | 1,5 | 1,7 | 1,7 | 2,92 |
| C18:1 | 77,4 | 15,0 | 12,9 | 11,7 | 59,3 | 56,67 |
| C18:2 (n-6) | 13,3 | 70,9 | 45,7 | 1,3 | 22,6 | 27,66 |
| C18:3 (n-3) | 0,1 | 0,4 | 13,9 | 0,9 | 9,6 | 2,88 |
| C18:3 (n-6) | | | 15,7 | 0,2 | | 0,48 |
| C18:4 (n-3) | | | 3,0 | 3,5 | | 0,20 |
| C20:0 | 0,2 | | | 0,1 | 0,7 | 0,27 |
| C20:1 | 0,2 | | 0,5 | 5,5 | 0,9 | 0,50 |
| C20:5 (n-3) | | | | 19,5 | | 0,58 |
| C22:0 | 1,0 | | | | 0,1 | 0,52 |
| C22:1 | | | | 4,0 | | 0,12 |
| C22:5 (n-3) | | | | 2,6 | | 0,08 |
| C22:6 (n-3) | | | | 12,2 | | 0,37 |
| % d'huile | 50 | 20 | 3 | 3 | 24 | 100 |
| AG saturés (%) | | | | | | 9,83 |
| AG monoinsat (%) | | | | | | 57,59 |
| AG polyinsat (%) | | | | | | 32,24 |
| Total AG n-6 (%) | | | | | | 28,14 |
| Total AG n-3 (%) | | | | | | 4,10 |
| Rapport n-6/n-3 | | | | | | 6,86 |

**TABLEAU 7**

| Acides gras (en %) | Huile d'abricot | SFO | Huile de cassis | Huile de poisson | Huile de colza | Mélange |
|---|---|---|---|---|---|---|
| C14:0 | | | | 5,7 | | 0,17 |
| C16:0 | 4,8 | 6,5 | 6,2 | 12,5 | 4,9 | 5,28 |
| C16:1 | 0,7 | 0,1 | 0,4 | 7,4 | 0,2 | 0,66 |
| C18:0 | 1,1 | 4,2 | 1,5 | 1,7 | 1,7 | 1,64 |
| C18:1 | 62,5 | 25,5 | 12,9 | 11,7 | 59,3 | 54,70 |
| C18:2 (n-6) | 30,8 | 63,0 | 45,7 | 1,3 | 22,6 | 30,79 |
| C18:3 (n-3) | 0,1 | | 13,9 | 0,9 | 9,6 | 3,76 |
| C18:3 (n-6) | | 0,1 | 15,7 | 0,2 | | 0,49 |
| C18:4 (n-3) | | | 3,0 | 3,5 | | 0,20 |
| C20:0 | | | | 0,1 | 0,7 | 0,24 |
| C20:1 | | | 0,5 | 5,5 | 0,9 | 0,49 |
| C20:5 (n-3) | | | | 19,5 | | 0,58 |
| C22:0 | | 0,6 | | | 0,1 | 0,09 |
| C22:1 | | | | 4,0 | | 0,12 |
| C22:5 (n-3) | | | | 2,6 | | 0,08 |
| C22:6 (n-3) | | | | 12,2 | | 0,37 |
| % d'huile | 50 | 10 | 3 | 3 | 34 | 100 |
| AG saturés (%) | | | | | | 7,43 |
| AG monoinsat (%) | | | | | | 55,97 |
| AG polyinsat (%) | | | | | | 36,26 |
| Total AG n-6 (%) | | | | | | 31,28 |
| Total AG n-3 (%) | | | | | | 4,98 |
| Rapport n-6/n-3 | | | | | | 6,28 |

**TABLEAU 8**

| Acides gras (en %) | HOSFO | SFO | Huile de cassis | Huile de poisson | Huile de kiwi | Mélange |
|---|---|---|---|---|---|---|
| C14:0 | | | | 5,7 | | 0,17 |
| C16:0 | 4,0 | 6,5 | 6,2 | 12,5 | 5,0 | 5,03 |
| C16:1 | | 0,1 | 0,4 | 7,4 | | 0,26 |
| C18:0 | 3,8 | 4,2 | 1,5 | 1,7 | 2,5 | 3,74 |
| C18:1 | 77,4 | 25,5 | 12,9 | 11,7 | 11,9 | 57,52 |
| C18:2 (n-6) | 13,3 | 63,0 | 45,7 | 1,3 | 15,0 | 27,38 |
| C18:3 (n-3) | 0,1 | | 13,9 | 0,9 | 64,3 | 2,44 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,4 | 0,14 |
| C20:1 | 0,2 | | 0,5 | 5,5 | 0,3 | 0,32 |
| C20:5 (n-3) | | | | 19,5 | | 0,58 |
| C22:0 | 1,0 | 0,6 | | | 0,2 | 0,81 |
| C22:1 | | | | 4,0 | 0,1 | 0,12 |
| C22:5 (n-3) | | | | 2,6 | | 0,08 |
| C22:6 (n-3) | | | | 12,2 | | 0,37 |
| % d'huile | 64 | 27 | 3 | 3 | 3 | 100 |
| AG saturés (%) | | | | | | 9,88 |
| AG monoinsat (%) | | | | | | 58,22 |
| AG polyinsat (%) | | | | | | 31,55 |
| Total AG n-6 (%) | | | | | | 27,89 |
| Total AG n-3 (%) | | | | | | 3,66 |
| Rapport n-6/n-3 | | | | | | 7,62 |

**TABLEAU 9**

| Acides gras (en %) | HOSFO | SFO | Huile de cassis | Huile de poisson | Huile de kiwi | Mélange |
|---|---|---|---|---|---|---|
| C14:0 | | | | 5,7 | | 0,17 |
| C16:0 | 4,0 | 6,5 | 6,2 | 12,5 | 5,0 | 5,01 |
| C16:1 | | 0,1 | 0,4 | 7,4 | | 0,26 |
| C18:0 | 3,8 | 4,2 | 1,5 | 1,7 | 2,5 | 3,72 |
| C18:1 | 77,4 | 25,5 | 12,9 | 11,7 | 11,9 | 57,38 |
| C18:2 (n-6) | 13,3 | 63,0 | 45,7 | 1,3 | 15,0 | 26,90 |
| C18:3 (n-3) | 0,1 | | 13,9 | 0,9 | 64,3 | 3,08 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,4 | 0,15 |
| C20:1 | 0,2 | | 0,5 | 5,5 | 0,3 | 0,32 |
| C20:5 (n-3) | | | | 19,5 | | 0,58 |
| C22:0 | 1,0 | 0,6 | | | 0,2 | 0,80 |
| C22:1 | | | | 4,0 | 0,1 | 0,12 |
| C22:5 (n-3) | | | | 2,6 | | 0,08 |
| C22:6 (n-3) | | | | 12,2 | | 0,37 |
| % d'huile | 64 | 26 | 3 | 3 | 4 | 100 |
| AG saturés (%) | | | | | | 9,85 |
| AG monoinsat (%) | | | | | | 58,08 |
| AG polyinsat (%) | | | | | | 31,71 |
| Total AG n-6 (%) | | | | | | 27,41 |
| Total AG n-3 (%) | | | | | | 4,30 |
| Rapport n-6/n-3 | | | | | | 6,37 |

**TABLEAU 10**

| Acides gras (en %) | HOSFO | SFO | Huile de cassis | Huile de poisson | Huile de kiwi | Mélange |
|---|---|---|---|---|---|---|
| C14:0 | | | | 5,7 | | 0,23 |
| C16:0 | 4,0 | 6,5 | 6,2 | 12,5 | 5,0 | 5,07 |
| C16:1 | | 0,1 | 0,4 | 7,4 | | 0,34 |
| C18:0 | 3,8 | 4,2 | 1,5 | 1,7 | 2,5 | 3,67 |
| C18:1 | 77,4 | 25,5 | 12,9 | 11,7 | 11,9 | 57,12 |
| C18:2 (n-6) | 13,3 | 63,0 | 45,7 | 1,3 | 15,0 | 26,11 |
| C18:3 (n-3) | 0,1 | | 13,9 | 0,9 | 64,3 | 3,23 |
| C18:3 (n-6) | | 0,1 | 15,7 | 0,2 | | 0,66 |
| C18:4 (n-3) | | | 3,0 | 3,5 | | 0,26 |
| C20:0 | 0,2 | | | 0,1 | 0,4 | 0,15 |
| C20:1 | 0,2 | | 0,5 | 5,5 | 0,3 | 0,38 |
| C20:5 (n-3) | | | | 19,5 | | 0,78 |
| C22:0 | 1,0 | 0,6 | | | 0,2 | 0,79 |
| C22:1 | | | | 4,0 | 0,1 | 0,16 |
| C22:5 (n-3) | | | | 2,6 | | 0,10 |
| C22:6 (n-3) | | | | 12,2 | | 0,49 |
| % d'huile | 64 | 24 | 4 | 4 | 4 | 100 |
| AG saturés (%) | | | | | | 9,90 |
| AG monoinsat (%) | | | | | | 58,00 |
| AG polyinsat (%) | | | | | | 31,63 |
| Total AG n-6 (%) | | | | | | 26,77 |
| Total AG n-3 (%) | | | | | | 4,86 |
| Rapport n-6/n-3 | | | | | | 5,51 |

**TABLEAU 11**

| Acides gras (en %) | HOSFO | SFO | Huile de cassis | Huile de poisson | Huile de kiwi | Mélange |
|---|---|---|---|---|---|---|
| C14:0 | | | | 5,7 | | 0,29 |
| C16:0 | 4,0 | 6,5 | 6,2 | 12,5 | 5,0 | 5,12 |
| C16:1 | | 0,1 | 0,4 | 7,4 | | 0,41 |
| C18:0 | 3,8 | 4,2 | 1,5 | 1,7 | 2,5 | 3,62 |
| C18:1 | 77,4 | 25,5 | 12,9 | 11,7 | 11,9 | 56,85 |
| C18:2 (n-6) | 13,3 | 63,0 | 45,7 | 1,3 | 15,0 | 25,32 |
| C18:3 (n-3) | 0,1 | | 13,9 | 0,9 | 64,3 | 3,38 |
| C18:3 (n-6) | | 0,1 | 15,7 | 0,2 | | 0,82 |
| C18:4 (n-3) | | | 3,0 | 3,5 | | 0,33 |
| C20:0 | 0,2 | | | 0,1 | 0,4 | 0,15 |
| C20:1 | 0,2 | | 0,5 | 5,5 | 0,3 | 0,44 |
| C20:5 (n-3) | | | | 19,5 | | 0,97 |
| C22:0 | 1,0 | 0,6 | | | 0,2 | 0,78 |
| C22:1 | | | | 4,0 | 0,1 | 0,20 |
| C22:5 (n-3) | | | | 2,6 | | 0,13 |
| C22:6 (n-3) | | | | 12,2 | | 0,61 |
| % d'huile | 64 | 22 | 5 | 5 | 4 | 100 |
| AG saturés (%) | | | | | | 9,96 |
| AG monoinsat (%) | | | | | | 57,91 |
| AG polyinsat (%) | | | | | | 31,55 |
| Total AG n-6 (%) | | | | | | 26,14 |
| Total AG n-3 (%) | | | | | | 5,42 |
| Rapport n-6/n-3 | | | | | | 4,83 |

**TABLEAU 12**

| Acides gras (en %) | HOSFO | SFO | Huile de cassis | Huile de poisson | Huile de chia | Mélange |
|---|---|---|---|---|---|---|
| C14:0 | | | | 5,7 | | 0,17 |
| C16:0 | 4,0 | 6,5 | 6,2 | 12,5 | 7,0 | 5,09 |
| C16:1 | | 0,1 | 0,4 | 7,4 | | 0,26 |
| C18:0 | 3,8 | 4,2 | 1,5 | 1,7 | 3,6 | 3,77 |
| C18:1 | 77,4 | 25,5 | 12,9 | 11,7 | 7,6 | 57,39 |
| C18:2 (n-6) | 13,3 | 63,0 | 45,7 | 1,3 | 17,6 | 27,46 |
| C18:3 (n-3) | 0,1 | | 13,9 | 0,9 | 61,7 | 2,36 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,3 | 0,14 |
| C20:1 | 0,2 | | 0,5 | 5,5 | 0,3 | 0,32 |
| C20:5 (n-3) | | | | 19,5 | | 0,58 |
| C22:0 | 1,0 | 0,6 | | | | 0,80 |
| C22:1 | | | | 4,0 | | 0,12 |
| C22:5 (n-3) | | | | 2,6 | | 0,08 |
| C22:6 (n-3) | | | | 12,2 | | 0,37 |
| % d'huile | 64 | 27 | 3 | 3 | 3 | 100 |
| AG saturés (%) | | | | | | 9,97 |
| AG monoinsat (%) | | | | | | 58,09 |
| AG polyinsat (%) | | | | | | 31,55 |
| Total AG n-6 (%) | | | | | | 27,96 |
| Total AG n-3 (%) | | | | | | 3,58 |
| Rapport n-6/n-3 | | | | | | 7,80 |

**TABLEAU 13**

| Acides gras (en %) | HOSFO | SFO | Huile de cassis | Huile de poisson | Huile de chia | Mélange |
|---|---|---|---|---|---|---|
| C14:0 | | | | 5,7 | | 0,17 |
| C16:0 | 4,0 | 6,5 | 6,2 | 12,5 | 7,0 | 5,09 |
| C16:1 | | 0,1 | 0,4 | 7,4 | | 0,26 |
| C18:0 | 3,8 | 4,2 | 1,5 | 1,7 | 3,6 | 3,76 |
| C18:1 | 77,4 | 25,5 | 12,9 | 11,7 | 7,6 | 57,21 |
| C18:2 (n-6) | 13,3 | 63,0 | 45,7 | 1,3 | 17,6 | 27,01 |
| C18:3 (n-3) | 0,1 | | 13,9 | 0,9 | 61,7 | 2,98 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,3 | 0,14 |
| C20:1 | 0,2 | | 0,5 | 5,5 | 0,3 | 0,32 |
| C20:5 (n-3) | | | | 19,5 | | 0,58 |
| C22:0 | 1,0 | 0,6 | | | | 0,80 |
| C22:1 | | | | 4,0 | | 0,12 |
| C22:5 (n-3) | | | | 2,6 | | 0,08 |
| C22:6 (n-3) | | | | 12,2 | | 0,37 |
| % d'huile | 64 | 26 | 3 | 3 | 4 | 100 |
| AG saturés (%) | | | | | | 9,96 |
| AG monoinsat (%) | | | | | | 57,91 |
| AG polyinsat (%) | | | | | | 31,71 |
| Total AG n-6 (%) | | | | | | 27,51 |
| Total AG n-3 (%) | | | | | | 4,20 |
| Rapport n-6/n-3 | | | | | | 6,55 |

**TABLEAU 14**

| Acides gras (en %) | HOSFO | SFO | Huile de cassis | Huile de poisson | Huile de chia | Mélange |
|---|---|---|---|---|---|---|
| C14:0 | | | | 5,7 | | 0,23 |
| C16:0 | 4,0 | 6,5 | 6,2 | 12,5 | 7,0 | 5,15 |
| C16:1 | | 0,1 | 0,4 | 7,4 | | 0,34 |
| C18:0 | 3,8 | 4,2 | 1,5 | 1,7 | 3,6 | 3,71 |
| C18:1 | 77,4 | 25,5 | 12,9 | 11,7 | 7,6 | 56,94 |
| C18:2 (n-6) | 13,3 | 63,0 | 45,7 | 1,3 | 17,6 | 26,22 |
| C18:3 (n-3) | 0,1 | | 13,9 | 0,9 | 61,7 | 3,12 |
| C18:3 (n-6) | | 0,1 | 15,7 | 0,2 | | 0,66 |
| C18:4 (n-3) | | | 3,0 | 3,5 | | 0,26 |
| C20:0 | 0,2 | | | 0,1 | 0,3 | 0,14 |
| C20:1 | 0,2 | | 0,5 | 5,5 | 0,3 | 0,38 |
| C20:5 (n-3) | | | | 19,5 | | 0,78 |
| C22:0 | 1,0 | 0,6 | | | | 0,78 |
| C22:1 | | | | 4,0 | | 0,16 |
| C22:5 (n-3) | | | | 2,6 | | 0,10 |
| C22:6 (n-3) | | | | 12,2 | | 0,49 |
| % d'huile | 64 | 24 | 4 | 4 | 4 | 100 |
| AG saturés (%) | | | | | | 10,02 |
| AG monoinsat (%) | | | | | | 57,82 |
| AG polyinsat (%) | | | | | | 31,63 |
| Total AG n-6 (%) | | | | | | 26,88 |
| Total AG n-3 (%) | | | | | | 4,76 |
| Rapport n-6/n-3 | | | | | | 5,65 |

**TABLEAU 15**

| Acides gras (en %) | HOSFO | SFO | Huile de cassis | Huile de poisson | Huile de chia | Mélange |
|---|---|---|---|---|---|---|
| C14:0 | | | | 5,7 | | 0,29 |
| C16:0 | 4,0 | 6,5 | 6,2 | 12,5 | 7,0 | 5,21 |
| C16:1 | | 0,1 | 0,4 | 7,4 | | 0,41 |
| C18:0 | 3,8 | 4,2 | 1,5 | 1,7 | 3,6 | 3,66 |
| C18:1 | 77,4 | 25,5 | 12,9 | 11,7 | 7,6 | 56,68 |
| C18:2 (n-6) | 13,3 | 63,0 | 45,7 | 1,3 | 17,6 | 25,43 |
| C18:3 (n-3) | 0,1 | | 13,9 | 0,9 | 61,7 | 3,27 |
| C18:3 (n-6) | | 0,1 | 15,7 | 0,2 | | 0,82 |
| C18:4 (n-3) | | | 3,0 | 3,5 | | 0,33 |
| C20:0 | 0,2 | | | 0,1 | 0,3 | 0,15 |
| C20:1 | 0,2 | | 0,5 | 5,5 | 0,3 | 0,44 |
| C20:5 (n-3) | | | | 19,5 | | 0,97 |
| C22:0 | 1,0 | 0,6 | | | | 0,77 |
| C22:1 | | | | 4,0 | | 0,20 |
| C22:5 (n-3) | | | | 2,6 | | 0,13 |
| C22:6 (n-3) | | | | 12,2 | | 0,61 |
| % d'huile | 64 | 22 | 5 | 5 | 4 | 100 |
| AG saturés (%) | | | | | | 10,07 |
| AG monoinsat (%) | | | | | | 57,73 |
| AG polyinsat (%) | | | | | | 31,56 |
| Total AG n-6 (%) | | | | | | 26,24 |
| Total AG n-3 (%) | | | | | | 5,31 |
| Rapport n-6/n-3 | | | | | | 4,94 |

**TABLEAU 16**

| Acides gras (en %) | HOSFO | SFO | Huile de cassis | Huile de poisson | Huile de lin | Mélange |
|---|---|---|---|---|---|---|
| C14:0 | | | | 5,7 | | 0,17 |
| C16:0 | 4,0 | 6,5 | 6,2 | 12,5 | 6,0 | 5,06 |
| C16:1 | | 0,1 | 0,4 | 7,4 | | 0,26 |
| C18:0 | 3,8 | 4,2 | 1,5 | 1,7 | 4,0 | 3,78 |
| C18:1 | 77,4 | 25,5 | 12,9 | 11,7 | 22,0 | 57,82 |
| C18:2 (n-6) | 13,3 | 63,0 | 45,7 | 1,3 | 16,0 | 27,41 |
| C18:3 (n-3) | 0,1 | | 13,9 | 0,9 | 52,0 | 2,07 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | | 0,13 |
| C20:1 | 0,2 | | 0,5 | 5,5 | | 0,31 |
| C20:5 (n-3) | | | | 19,5 | | 0,58 |
| C22:0 | 1,0 | 0,6 | | | | 0,80 |
| C22:1 | | | | 4,0 | | 0,12 |
| C22:5 (n-3) | | | | 2,6 | | 0,08 |
| C22:6 (n-3) | | | | 12,2 | | 0,37 |
| % d'huile | 64 | 27 | 3 | 3 | 3 | 100 |
| AG saturés (%) | | | | | | 9,94 |
| AG monoinsat (%) | | | | | | 58,51 |
| AG polyinsat (%) | | | | | | 31,21 |
| Total AG n-6 (%) | | | | | | 27,92 |
| Total AG n-3 (%) | | | | | | 3,29 |
| Rapport n-6/n-3 | | | | | | 8,48 |

**TABLEAU 17**

| Acides gras (en %) | HOSFO | SFO | Huile de cassis | Huile de poisson | Huile de lin | Mélange |
|---|---|---|---|---|---|---|
| C14:0 | | | | 5,7 | | 0,17 |
| C16:0 | 4,0 | 6,5 | 6,2 | 12,5 | 6,0 | 5,05 |
| C16:1 | | 0,1 | 0,4 | 7,4 | | 0,26 |
| C18:0 | 3,8 | 4,2 | 1,5 | 1,7 | 4,0 | 3,78 |
| C18:1 | 77,4 | 25,5 | 12,9 | 11,7 | 22,0 | 57,78 |
| C18:2 (n-6) | 13,3 | 63,0 | 45,7 | 1,3 | 16,0 | 26,94 |
| C18:3 (n-3) | 0,1 | | 13,9 | 0,9 | 52,0 | 2,59 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | | 0,13 |
| C20:1 | 0,2 | | 0,5 | 5,5 | | 0,31 |
| C20:5 (n-3) | | | | 19,5 | | 0,58 |
| C22:0 | 1,0 | 0,6 | | | | 0,80 |
| C22:1 | | | | 4,0 | | 0,12 |
| C22:5 (n-3) | | | | 2,6 | | 0,08 |
| C22:6 (n-3) | | | | 12,2 | | 0,37 |
| % d'huile | 64 | 26 | 3 | 3 | 4 | 100 |
| AG saturés (%) | | | | | | 9,93 |
| AG monoinsat (%) | | | | | | 58,47 |
| AG polyinsat (%) | | | | | | 31,26 |
| Total AG n-6 (%) | | | | | | 27,45 |
| Total AG n-3 (%) | | | | | | 3,81 |
| Rapport n-6/n-3 | | | | | | 7,20 |

**TABLEAU 18**

| Acides gras (en %) | HOSFO | SFO | Huile de cassis | Huile de poisson | Huile de lin | Mélange |
|---|---|---|---|---|---|---|
| C14:0 | | | | 5,7 | | 0,17 |
| C16:0 | 4,0 | 6,5 | 6,2 | 12,5 | 6,0 | 5,05 |
| C16:1 | | 0,1 | 0,4 | 7,4 | | 0,26 |
| C18:0 | 3,8 | 4,2 | 1,5 | 1,7 | 4,0 | 3,78 |
| C18:1 | 77,4 | 25,5 | 12,9 | 11,7 | 22,0 | 57,75 |
| C18:2 (n-6) | 13,3 | 63,0 | 45,7 | 1,3 | 16,0 | 26,47 |
| C18:3 (n-3) | 0,1 | | 13,9 | 0,9 | 52,0 | 3,11 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | | 0,13 |
| C20:1 | 0,2 | | 0,5 | 5,5 | | 0,31 |
| C20:5 (n-3) | | | | 19,5 | | 0,58 |
| C22:0 | 1,0 | 0,6 | | | | 0,79 |
| C22:1 | | | | 4,0 | | 0,12 |
| C22:5 (n-3) | | | | 2,6 | | 0,08 |
| C22:6 (n-3) | | | | 12,2 | | 0,37 |
| % d'huile | 64 | 25 | 3 | 3 | 5 | 100 |
| AG saturés (%) | | | | | | 9,92 |
| AG monoinsat (%) | | | | | | 58,44 |
| AG polyinsat (%) | | | | | | 31,31 |
| Total AG n-6 (%) | | | | | | 26,97 |
| Total AG n-3 (%) | | | | | | 4,33 |
| Rapport n-6/n-3 | | | | | | 6,23 |

**TABLEAU 19**

| Acides gras (en %) | HOSFO | SFO | Huile de cassis | Huile de poisson | Huile de rosa mosq | Mélange |
|---|---|---|---|---|---|---|
| C14:0 | | | | 5,7 | | 0,17 |
| C16:0 | 4,0 | 6,5 | 6,2 | 12,5 | 3,2 | 4,87 |
| C16:1 | | 0,1 | 0,4 | 7,4 | 0,1 | 0,26 |
| C18:0 | 3,8 | 4,2 | 1,5 | 1,7 | 1,7 | 3,64 |
| C18:1 | 77,4 | 25,5 | 12,9 | 11,7 | 14,2 | 57,25 |
| C18:2 (n-6) | 13,3 | 63,0 | 45,7 | 1,3 | 46,3 | 27,82 |
| C18:3 (n-3) | 0,1 | | 13,9 | 0,9 | 33,3 | 2,51 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,9 | 0,18 |
| C20:1 | 0,2 | | 0,5 | 5,5 | 0,2 | 0,32 |
| C20:5 (n-3) | | | | 19,5 | | 0,58 |
| C22:0 | 1,0 | 0,6 | | | 0,1 | 0,79 |
| C22:1 | | | | 4,0 | | 0,12 |
| C22:5 (n-3) | | | | 2,6 | | 0,08 |
| C22:6 (n-3) | | | | 12,2 | | 0,37 |
| % d'huile | 64 | 24 | 3 | 3 | 6 | 100 |
| AG saturés (%) | | | | | | 9,66 |
| AG monoinsat (%) | | | | | | 57,95 |
| AG polyinsat (%) | | | | | | 32,05 |
| Total AG n-6 (%) | | | | | | 28,32 |
| Total AG n-3 (%) | | | | | | 3,73 |
| Rapport n-6/n-3 | | | | | | 7,59 |

**TABLEAU 20**

| Acides gras (en %) | HOSFO | SFO | Huile de cassis | Huile de poisson | Huile de rosa mosq | Mélange |
|---|---|---|---|---|---|---|
| C14:0 | | | | 5,7 | | 0,17 |
| C16:0 | 4,0 | 6,5 | 6,2 | 12,5 | 3,2 | 4,81 |
| C16:1 | | 0,1 | 0,4 | 7,4 | 0,1 | 0,26 |
| C18:0 | 3,8 | 4,2 | 1,5 | 1,7 | 1,7 | 3,59 |
| C18:1 | 77,4 | 25,5 | 12,9 | 11,7 | 14,2 | 57,02 |
| C18:2 (n-6) | 13,3 | 63,0 | 45,7 | 1,3 | 46,3 | 27,49 |
| C18:3 (n-3) | 0,1 | | 13,9 | 0,9 | 33,3 | 3,17 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,9 | 0,20 |
| C20:1 | 0,2 | | 0,5 | 5,5 | 0,2 | 0,32 |
| C20:5 (n-3) | | | | 19,5 | | 0,58 |
| C22:0 | 1,0 | 0,6 | | | 0,1 | 0,78 |
| C22:1 | | | | 4,0 | | 0,12 |
| C22:5 (n-3) | | | | 2,6 | | 0,08 |
| C22:6 (n-3) | | | | 12,2 | | 0,37 |
| % d'huile | 64 | 22 | 3 | 3 | 8 | 100 |
| AG saturés (%) | | | | | | 9,55 |
| AG monoinsat (%) | | | | | | 57,73 |
| AG polyinsat (%) | | | | | | 32,38 |
| Total AG n-6 (%) | | | | | | 27,98 |
| Total AG n-3 (%) | | | | | | 4,40 |
| Rapport n-6/n-3 | | | | | | 6,37 |

**TABLEAU 21**

| Acides gras (en %) | HOSFO | SFO | Huile de cassis | Huile de poisson | Huile de luzerne | Mélange |
|---|---|---|---|---|---|---|
| C14:0 | | | | 5,7 | | 0,17 |
| C16:0 | 4,0 | 6,5 | 6,2 | 12,5 | 9,6 | 5,26 |
| C16:1 | | 0,1 | 0,4 | 7,4 | | 0,26 |
| C18:0 | 3,8 | 4,2 | 1,5 | 1,7 | 2,1 | 3,66 |
| C18:1 | 77,4 | 25,5 | 12,9 | 11,7 | 10,9 | 57,05 |
| C18:2 (n-6) | 13,3 | 63,0 | 45,7 | 1,3 | 41,4 | 27,53 |
| C18:3 (n-3) | 0,1 | | 13,9 | 0,9 | 34,0 | 2,55 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,7 | 0,17 |
| C20:1 | 0,2 | | 0,5 | 5,5 | 0,2 | 0,32 |
| C20:5 (n-3) | | | | 19,5 | | 0,58 |
| C22:0 | 1,0 | 0,6 | | | 0,6 | 0,82 |
| C22:1 | | | | 4,0 | | 0,12 |
| C22:5 (n-3) | | | | 2,6 | | 0,08 |
| C22:6 (n-3) | | | | 12,2 | | 0,37 |
| % d'huile | 64 | 24 | 3 | 3 | 6 | 100 |
| AG saturés (%) | | | | | | 10,08 |
| AG monoinsat (%) | | | | | | 57,75 |
| AG polyinsat (%) | | | | | | 31,80 |
| Total AG n-6 (%) | | | | | | 28,03 |
| Total AG n-3 (%) | | | | | | 3,77 |
| Rapport n-6/n-3 | | | | | | 7,43 |

**TABLEAU 22**

| Acides gras (en %) | HOSFO | SFO | Huile de cassis | Huile de poisson | Huile de luzerne | Mélange |
|---|---|---|---|---|---|---|
| C14:0 | | | | 5,7 | | 0,17 |
| C16:0 | 4,0 | 6,5 | 6,2 | 12,5 | 9,6 | 5,32 |
| C16:1 | | 0,1 | 0,4 | 7,4 | | 0,26 |
| C18:0 | 3,8 | 4,2 | 1,5 | 1,7 | 2,1 | 3,62 |
| C18:1 | 77,4 | 25,5 | 12,9 | 11,7 | 10,9 | 56,76 |
| C18:2 (n-6) | 13,3 | 63,0 | 45,7 | 1,3 | 41,4 | 27,09 |
| C18:3 (n-3) | 0,1 | | 13,9 | 0,9 | 34,0 | 3,23 |
| C18:3 (n-6) | | 0,1 | 15,7 | 0,2 | | 0,50 |
| C18:4 (n-3) | | | 3,0 | 3,5 | | 0,20 |
| C20:0 | 0,2 | | | 0,1 | 0,7 | 0,19 |
| C20:1 | 0,2 | | 0,5 | 5,5 | 0,2 | 0,32 |
| C20:5 (n-3) | | | | 19,5 | | 0,58 |
| C22:0 | 1,0 | 0,6 | | | 0,6 | 0,82 |
| C22:1 | | | | 4,0 | | 0,12 |
| C22:5 (n-3) | | | | 2,6 | | 0,08 |
| C22:6 (n-3) | | | | 12,2 | | 0,37 |
| % d'huile | 64 | 22 | 3 | 3 | 8 | 100 |
| AG saturés (%) | | | | | | 10,12 |
| AG monoinsat (%) | | | | | | 57,46 |
| AG polyinsat (%) | | | | | | 32,05 |
| Total AG n-6 (%) | | | | | | 27,59 |
| Total AG n-3 (%) | | | | | | 4,45 |
| Rapport n-6/n-3 | | | | | | 6,20 |

## Revendications

1. Composition lipidique à usage alimentaire, caractérisée par le fait que les acides gras des triglycérides comprennent, en poids, au plus 10 % d'acides gras saturés, 50 % à 70 % d'acides gras monoinsaturés et 30 à 40 % d'acides gras polyinsaturés, que les acides gras n-6 représentent 25 à 35 %, que le rapport pondéral des acides gras de la famille n-6 sur ceux de la famille n-3 est 4,5:1 à 8,5:1 et que les acides gras polyinsaturés comprennent une quantité efficace d'acides des familles n-3 et n-6 de degré d'insaturation 3 et plus.

2. Composition lipidique selon la revendication 1, caractérisée par le fait qu'elle contient, en poids, 45 à 68 % d'huile d'olive, d'huile d'abricot, d'hybrides de tournesol et de carthame à haute teneur en acide oléique ou d'oléines d'huiles végétales.

3. Composition lipidique selon la revendication 1, caractérisée par le fait qu'elle contient, en poids, 8 à 28 % d'huile de tournesol, d'huile de pépins de raisin, d'huile de passiflore, d'huile de tomate ou d'huile de carthame et 1 à 10 % d'une huile susceptible de fournir une quantité efficace d'acide de degré d'insaturation au moins 3, choisie parmi l'huile d'onagre, de bourrache et de l'huile de pépins de cassis.

4. Composition lipidique selon la revendication 1, caractérisée par le fait qu'elle contient, en poids, 2 à 30 % d'huile de colza, d'huile de chia, d'huile de lin, d'huile de kiwi, d'huile de luzerne, d'huile de rosa mosqueta et 1 à 8 % d'huile d'organismes marins.

5. Composition lipidique à usage alimentaire, caractérisée par le fait que la composition moyenne des acides gras des triglycérides principaux de la composition finale est la suivante:
| Acide gras | % en poids |
|---|---|
| C16:0 | 3-8, |
| C18:0 | 1-5 |
| C18:1 | 50-65 |
| C18:2 | 20-35 |
| C18:3, n-6 (gamma) | 0,2-1 |
| C18:3, n-3 (alpha) | 1,5-4 |
| C18:4, n-3 | 0,1-0,5 |
| C20:5, n-3 (EPA) | 0,2-1 |
| C22:6, n-3 (DHA) | 0,1-0,8. |

6. Procédé de préparation d'une composition lipidique selon l'une des revendications 1 à 5, caractérisé par le fait que l'on incorpore un antioxydant dans l'huile riche en acides gras monoinsaturés, que l'on mélange les différentes huiles en évitant des températures supérieures à 30°C et que l'on conditionne le mélange sous atmosphère inerte.

7. Aliment contenant de la matière grasse, caractérisé par le fait que celle-ci est une composition lipidique selon l'une des revendications 1 à 5.

## Claims

1. Lipidic composition for use as a food, characterized in that the fatty acids of the triglycerides contain at most 10 % by weight of saturated fatty acids, 50 % to 70 % by weight of mono-unsaturated fatty acids and 30 to 40 % by weight of polyunsaturated fatty acids, in that the n-6 fatty acids represent 25 to 35 %, in that the weight ratio of fatty acids of the n-6 family to those of the n-3 family is 4.5:1 to 8.5:1 and in that the polyunsaturated fatty acids contain an effective quantity of acids of the n-3 and n-6 families with a degree of unsaturation of 3 and over.

2. Lipidic composition according to claim 1, characterized in that it contains 45 to 68 % by weight of olive oil, apricot oil, hybrid sunflower oil and hybrid safflower oil with a high content of oleic acid or of the oleins of vegetable oils.

3. Lipidic composition according to claim 1, characterized in that it contains 8 to 28 % by weight of sunflower oil, grapeseed oil, passion flower oil, tomato oil or safflower oil and 1 to 10 % by weight of an oil capable of providing an effective quantity of an acid with a degree of unsaturation of at least 3, chosen from evening primrose oil, borage oil and blackcurrant seed oil.

4. Lipidic composition according to claim 1, characterized in that it contains 2 to 30 % by weight of rapeseed oil, chia oil, linseed oil, kiwi oil, lucerne oil, rosa mosqueta oil and 1 to 8 % by weight of oil of marine organisms.

5. Lipidic composition for use as a food, characterized in that the average composition of the fatty acids of the principal triglycerides of the final composition is as follows:
| **Fatty acid** | **% by weight** |
|---|---|
| C16:0 | 3-8 |
| C18:0 | 1-5 |
| C18:1 | 50-65 |
| C18:2 | 20-35 |
| C18:3, n-6 (gamma) | 0.2-1 |
| C18:3, n-3 (alpha) | 1.5-4 |
| C18:4, n-3 | 0.1-0.5 |
| C20:5, n-3 (EPA) | 0.2-1 |
| C22:6, n-3 (DHA) | 0.1-0.8 |

6. Method for preparing a lipidic composition according to one of claims 1 to 5, characterized in that an antioxidant is incorporated in the oil rich in mono-unsaturated fatty acids, in that the different oils are mixed while avoiding temperatures above 30°C and in that the mixture is packaged under an inert atmosphere.

7. Food containing fats, characterized in that it is a lipidic composition according to one of claims 1 to 5.

## Patentansprüche

1. Lipidzusammensetzung für Nahrungsmittelzwecke, dadurch gekennzeichnet, daß die Fettsäuren der Triglyceride, in Gewicht, höchstens 10% gesättigte Fettsäuren, 50% bis 70% einfach ungesättigte Fettsäuren und 30% bis 40% mehrfach ungesättigte Fettsäuren enthalten, wobei die n-6 Fettsäuren 25% bis 30% ausmachen, das Gewichtsverhältnis der Fettsäuren der Familie n-6 zu denen der Familie n-3 4,5:1 bis 8,5:1 beträgt und die mehrfach ungesättigten Fettsäuren eine wirksame Menge an Säuren der Familien n-3 und n-6 mit einem Ungesättigtheitsgrad von 3 und mehr umfassen.

2. Lipidzusammensetzung nach Anspruch 1, dadurch gekennzeichnet, daß sie, in Gewicht, 45 bis 68% Olivenöl, Aprikosenöl, Öl von Sonnenblumen- und Saflorhybriden mit einem erhöhten Gehalt an Ölsäure oder Oleine von Pflanzenölen enthält.

3. Lipidzusammensetzung nach Anspruch 1, dadurch gekennzeichnet, daß sie, in Gewicht, 8 bis 28% Sonnenblumenöl, Traubenkernöl, Passionsblumenöl, Tomatenöl oder Safloröl und von 1 bis 10% eines Öl enthält, das geeignet ist, eine wirksame Menge einer Säure mit einem Ungesättigtheitsgrad von wenigstens 3 bereitzustellen, das ausgewählt ist aus Nachtkerzenöl, Borretschöl und Johannisbeerenkernöl.

4. Lipidzusammensetzung nach Anspruch 1, dadurch gekennzeichnet, daß sie, in Gewicht, 2 bis 30% Rapsöl, Chiaöl, Leinöl, Kiwiöl, Luzerneöl, Moschusrosenöl und 1 bis 8% eines Seetieröls enthält.

5. Lipidzusammensetzung für Nahrungsmittelzwecke, dadurch gekennzeichnet, daß die mittlere Zusammensetzung der Fettsäuren der Haupttriglyceride in der fertigen Zusammensetzung die folgende ist:
| Fettsäure | Gew.-% |
|---|---|
| C16:0 | 3-8 |
| C18:0 | 1-5 |
| C18:1 | 50-65 |
| C18:2 | 20-35 |
| C18:3, n-6 (gamma) | 0,2-1 |
| C18:3, n-3 (alpha) | 1,5-4 |
| C18:4, n-3 | 0,1-0,5 |
| C20:5, n-3 (EPA) | 0,2-1 |
| C22:6, n-3 (DHA) | 0,1-0,8. |

6. Verfahren zur Herstellung einer Lipidzusammensetzung nach einem der Ansprüche 1 bis 5, dadurch gekennzeichnet, daß man ein Antioxidans in das an einfach ungesättigten Fettsäuren reiche Öl einführt, die verschiedenen Öle unter Vermeidung von Temperaturen von mehr als 30°C mischt und die Mischung unter einer Inertatmosphäre konditioniert.

7. Nahrungsmittel, das ein Fett enthält, dadurch gekennzeichnet, daß dieses eine Lipidzusammensetzung nach einem der Ansprüche 1 bis 5 ist.
